Europäisches Patentamt

European Patent Office

Office européen des brevets

(19)

(11) Veröffentlichungsnummer : **0 359 920 B1**

(12)

# EUROPÄISCHE PATENTSCHRIFT

(45) Veröffentlichungstag der Patentschrift :
**25.11.92 Patentblatt 92/48**

(51) Int. Cl.$^5$ : **B65G 57/06**, B65H 31/32

(21) Anmeldenummer : **89111817.6**

(22) Anmeldetag : **29.06.89**

(54) Vorrichtung zum automatischen Stapeln von plattenartigen flachen Elementen.

(30) Priorität : **20.09.88 DE 3831825**

(43) Veröffentlichungstag der Anmeldung :
**28.03.90 Patentblatt 90/13**

(45) Bekanntmachung des Hinweises auf die
Patenterteilung :
**25.11.92 Patentblatt 92/48**

(84) Benannte Vertragsstaaten :
**AT BE CH DE ES FR GB GR IT LI LU NL SE**

(56) Entgegenhaltungen :
EP-A- 0 211 404
DE-A- 2 740 665
DE-A- 2 853 995

(56) Entgegenhaltungen :
DE-A- 3 136 950
DE-A- 3 408 685
DE-A- 3 535 113
US-A- 3 385 457
US-A- 4 195 959

(73) Patentinhaber : **Wilhelm Bahmüller
Maschinenbau Präzisionswerkzeuge GmbH
Industriegebiet-Ost
W-7067 Plüderhausen (DE)**

(72) Erfinder : **Häfner, Walter
Trollingerweg 5
W-7307 Aichwald (DE)**

(74) Vertreter : **Rüger, Rudolf, Dr.-Ing. et al
Webergasse 3 Postfach 348
W-7300 Esslingen/Neckar (DE)**

EP 0 359 920 B1

## Beschreibung

Die Erfindung betrifft eine Vorrichtung zum automatischen Stapeln bzw. Palettieren von flachen Elementen wie Pappezuschnitten, vorgefalteten flachliegenden Faltschachteln und ähnlichem gemäß dem Oberbegriff des Hauptanspruchs.

Aus der DE-A-35 35 113 ist eine Vorrichtung zum automatischen Stapeln von geschuppt geförderten Bögen aus Papier bekannt. Die bekannte Vorrichtung enthält einen vertikal verstellbaren Hubtisch, der eine Stellfläche für eine einen Stapel aufnehmende Palette bildet. Oberhalb des Hubtisches ist ein ebenfalls höhenverstellbarer Zwischenablagetisch angeordnet, der außerdem horizontal zwischen zwei Stellungen hin und her bewegbar ist und eine Anzahl parallel zueinander in der horizontalen Bewegungsrichtung des Zwischentisches angeordneter Stäbe aufweist.

Oberhalb des Zwischenablagetisches sind Ausrichtmittel vorgesehen, die drei Seiten eines Schachtes begrenzen, der gegen die Förderrichtung der zu stapelnden Bögen zu offen ist. An dieser offenen Seite werden die zu slapelnden Bögen von einem Transportband in den Schacht und damit in das Lichtraumprofil des zu bildenden Stapels eingebracht und auf der Oberseite des Stapels abgelegt.

In seiner horizontal ersten Stellung befindet sich der Zwischenablagetisch in dem Lichtraumprofil des auf der Palette zu bildenden Stapels und nimmt die ankommenden Bögen auf. In seiner horizontal zweiten Stellung ist der Zwischenablagetisch aus dem Lichtraumprofil zurückgezogen; die Bögen werden jetzt auf der Palette gestapelt. Mit zunehmender Höhe des auf ihnen gebildeten Stapels senken sich der Hubtisch bzw. der Zwischenablagetisch allmählich ab, wobei die Oberseite des Stapels zwischen den Ausrichtmitteln verbleibt und durch diese ausgerichtet wird.

Hat der auf der Palette gebildete Stapel seine vorbestimmte Höhe erreicht, schiebt sich der Zwischenablagetisch horizontal über die Oberseite des gebildeten Stapels. Die weiterhin von dem Transportband angelieferten Bögen werden jetzt auf dem Zwischenablagetisch gestapelt, bis der Hubtisch eine neue Palette aufgenommen und vertikal nach oben unter den Zwischenablagetisch bewegt hat.

Der Zwischenablagetisch wird in seine horizontal zweite Stellung zurückgezogen und der Papierstapel dabei von Gleitbändern des Zwischenablagetisches auf der Palette abgelegt.

Mit der bekannten Vorrichtung können nur einzeln geförderte Bögen aus einem flexiblen Material wie z.B. Papier gestapelt werden. Kleinstapel oder steife flache Elemente lassen sich mit dieser Vorrichtung nicht zu Stapeln zusammentragen.

Desweiteren ist aus der US-A-41 89 270 eine Vorrichtung zum Stapeln von vorgeleimten Furnierblättern bekannt. Auch diese Vorrichtung weist einen höhenverstellbaren Hubtisch und einen vertikal sowie horizontal verstellbaren Zwischenablagetisch auf. Oberhalb des Zwischenablagetisches ist ein horizontal zwischen zwei Stellungen hin und her bewegbarer Übergabetisch vorgesehen, der sich in seiner horizontal ersten Stellung genau wie der Zwischenablagetisch im Lichtraumprofil des zu bildenden Stapels befindet. In seiner horizontal zweiten Stellung befindet sich der Übergabetisch im Bereich einer Transportstraße, von der er die zu stapelnden Furnierblätter übernimmt.

Übergabetisch, Zwischenablagetisch und Hubtisch sind -jeweils aus parallel zueinander angeordneten Stäben oder Gabelzinken gebildet, wobei die Stäbe des Hubtisches im Querschnitt U-förmig ausgebildet und so angeordnet sind, daß sie die Stäbe des Zwischenablagetisches von unten umgreifen können.

Jedes Furnierblatt wird von dem Übergabetisch einzeln in das Lichtraumprofil des zu bildenden Stapels eingebracht, indem der Übergabetisch seine horizontal erste Stellung einnimmt. Beim Zurückziehen des Übergabetisches in seine zweite horizontale Stellung wird das Furnierblatt von diesem abgestreift. Das abgestreifte Furnierblatt kommt auf dem Hubtisch oder auf der Oberseite des auf dem Hubtisch gebildeten Stapels zu liegen.

Hat dieser Stapel seine vorbestimmte Höhe erreicht, senkt sich der Hubtisch ab, der Zwischenablagetisch verschiebt sich in seine horizontal erste Stellung und übernimmt von dem Übergabetisch die ankommenden Furnierblätter, während der Hubtisch den fertigen Stapel an einen Rollengang übergibt. Hat der Hubtisch seinen Stapel abgegeben, wird er vertikal nach oben bewegt,und seine U-förmigen Stäbe umgreifen die Stäbe des über ihm befindlichen Zwischenablagetisches. Die Oberkanten der U-förmigen Stäbe gelangen dabei über die Oberkante der Stäbe des Zwischenablagetisches und übernehmen dadurch den auf dem Zwischenablagetisch gebildeten Teilstapel. Der Zwischenablagetisch wird jetzt in seine zweite horizontale Stellung zurückgefahren.

Die Furnierblätter haben durch ihre Leimschicht eine bedingt klebrige oder rutschfeste Seite und neigen nicht zum Verrutschen. Ein aus vorgeleimten Furnierblättern gebildeter Stapel läßt sich deshalb nachträglich nicht mehr ausrichten. Deswegen weist die bekannte Vorrichtung auch keine Ausrichtanschläge auf.

Mit der bekannten Vorrichtung ist es weder möglich, doppel- oder mehrnutzig zu arbeiten, noch können Kleinstapel oder flache Elemente, die zum Verrutschen neigen, zu Stapeln zusammengetragen werden.

Ausgehend hiervon ist es Aufgabe der vorliegenden Erfindung, eine gattungsgemäße Vorrichtung zum automatischen Stapeln von flachen Elementen zu schaffen, mit der mehrnutzig und unterbrechungsfrei gearbeitet werden kann, bzw. mit der auf der Palette saubere Stapel aus Kartonzuschnitten und dergl. gebildet werden.

Diese Aufgabe wird erfindungsgemäß mit einer gattungsgemäßen Vorrichtung mit den Merkmalen des kennzeichnenden Teils des Hauptanspruchs gelöst.

Infolge der Zwischenablagefläche, die im Transportweg der flachen Elemente zwischen dem Ablagetisch und der Palette bzw. der Oberseite des gebildeten Teilstapels liegt, können die auf dem Ablagetisch angesammelten flachen Elemente auch dann wegbefördert werden, wenn keine Palette vorhanden ist, die die flachen Elemente übernehmen könnte. In diesem Fall werden die flachen Elemente auf der Zwischenablagefläche zwischengespeichert, womit die gesamte Anlage unterbrechungsfrei weiterarbeiten kann. Wenn schließlich die neue Palette an Ort und Stelle ist, wird nach Erreichen einer vorbestimmten Höhe des auf der Zwischenablagefläche gebildeten Teilstapels der Teilstapel auf die Palette übergeben und das weitere Stapeln geschieht unmittelbar auf der Oberseite des auf der Palette gebildeten Teilstapels. Da außerdem das Abstapeln auf der Zwischenablagefläche immer dann erfolgt, wenn weder eine Palette vorhanden ist noch der Teilstapel auf der Palette eine ausreichende Höhe aufweist, ergibt sich eine besonders einfache Steuerung der zur Durchführung des Verfahrens notwendigen Vorrichtung, da in der Steuerung keine weiteren Fallunterscheidungen getroffen werden müssen. Weil der maximal mögliche Teilstapel auf der Zwischenablagefläche kleiner, gegebenenfalls erheblich kleiner als die Höhe des fertigen Stapels ist, kann bei der mechanischen Ausführung der Zwischenablagefläche eine vergleichsweise leichte Konstruktion verwendet werden, wogegen nur die Stellfläche für die Palette das volle Gewicht tragen muß.

Da die ankommenden flachen Elemente bereits auf der Ablagefläche vorausgerichtet werden, kann ein nach allen Richtungen glatter Stapel erzeugt werden. Dies kann gegebenenfalls noch dadurch verbessert werden, daß auch zumindest der oberste Bereich des Teilstapels auf der Zwischenablagefläche bzw. der Palette in zumindest zwei Richtungen zentriert wird.

Besonders einfach wird die Vorrichtung, wenn das Überführen der flachen Elemente des Teilstapels durch Schwerkraft erfolgt. Außerdem wird die Anordnung dann raumsparend, da sie nur eine vergleichsweise kleine Grundfläche belegt.

Die bei der erfindungsgemäßen Vorrichtung vorgesehene glatte Oberfläche des Ablagetisches ermöglicht es ohne weiteres, auch das in einem Kleinstapel untenliegende flache Element sauber auszurichten, ohne daß die Gefahr einer Beschädigung infolge eines Verhakens besteht.

Durch die Vielzahl der Anschlagflächen oberhalb des Ablagetisches entsteht gleichsam ein einstellbarer Schacht, bei dem eine Reihe von Wänden auf den gebildeten Kleinstapel zubewegbar sind, um die einzelnen flachen Elemente in dem Kleinstapel oder Bündel gegeneinander auszurichten.

Das Abstreifen des Kleinstapels von dem Zwischenablagetisch geschieht am einfachsten, wenn dieser aus kammartig angeordneten Gabelzinken besteht, die durch eine Abstreiferfläche hindurch horizontal bewegbar sind. Die Abstreiferfläche braucht unter diesen Umständen keine Bewegung des Zwischenablagetisches mitzumachen, sondern sie kann ortsfest an dem Gestell gehaltert sein, was die Anordnung und Steuerung vereinfacht. Andererseits ist es möglich, auch den auf dem Zwischenablagetisch befindlichen Kleinstapel mit Hilfe einer weiteren beweglichen Anschlagfläche im Zusammenwirken mit der Abstreiferfläche auszurichten.

Platzsparende Verhältnisse für die Lagerung und den Antrieb sowohl des Ablagetisches als auch des Zwischenablagetisches werden erreicht, wenn sich beide parallel zueinander und insbesondere in entgegengesetzten Richtungen bewegen können.

In der Zeichnung ist ein Ausführungsbeispiel des Gegenstandes der Erfindung dargestellt. Es zeigen:

Fig. 1 die neue Vorrichtung zum automatischen Stapeln von flachen Elementen in einer weitgehend schematisierten perspektivischen Teildarstellung, wobei einige Teile der Übersichtlichkeit halber weggelassen oder weggebrochen sind und

Fig. 2 bis 12 schematisiert verschiedene Betriebszustände der Vorrichtung nach Fig. 1, die zwischen zwei Palettenwechseln auftreten.

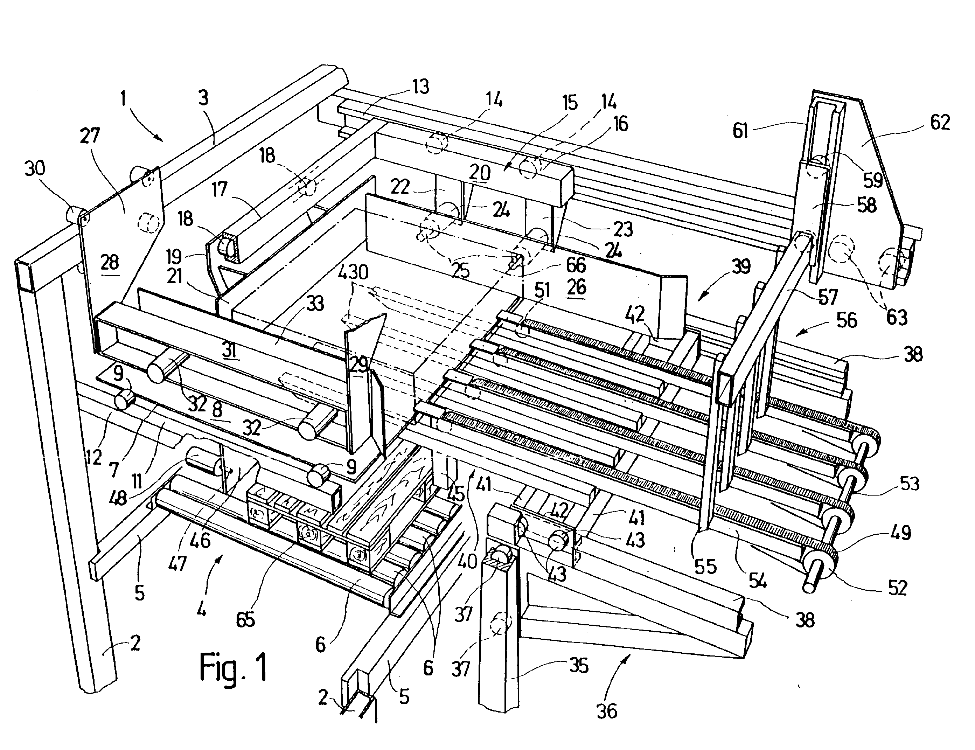

In Fig. 1 ist eine Vorrichtung zum Stapeln oder Palettieren plattenartiger flacher Elemente, wie Kartonzuschnitten, vorgefalteten flachliegenden Faltschachteln oder ähnlichem perspektivisch veranschaulicht. Die Vorrichtung enthält ein Gestell 1, wobei zur Vereinfachung der Beschreibung festgelegt sein soll, daß die Hinter- oder Rückseite des Gestells 1 in Fig. 1 links, die Vorderseite des Gestells 1 in Fig. 1 rechts liegt, während die linke Seite des Gestells 1 dem Betrachter zugekehrt und die rechte Seite dem Betrachter abgekehrt ist.

Das Gestell 1 enthält insgesamt vier an den Ecken einer rechteckigen Grundfläche senkrecht verlaufende aufgestellte Pfeiler 2, von denen aus Gründen der Übersichtlichkeit nur die beiden auf der linken Gestellseite befindlichen Pfeiler 2 gezeigt sind. Sämtliche Pfeiler 2 sind an ihrem oberen Ende durch horizontal verlaufende Balken 3 starr miteinander verbunden. Von den Balken 3 ist, um wesentliche Teile der Vorrichtung nich zu verdecken, nur der an der Hinterseite des Gestells 1 befindliche gezeigt. Die vier Pfeiler 2 bilden eine Vertikalführung für einen zwischen ihnen vertikal geführten Hubtisch 4. Dieser wird von zwei horizontal sich erstreckenden Trägern 5 gebildet, die durch nicht veranschaulichte Streben miteinander verbunden sind. Der vordere Träger 5 läuft zwischen den beiden an der Vorderseite des Gestells 1 befindlichen Pfeilern 2, während der hintere Träger 5 zwischen den Pfeilern 2 an der Rückseite des Gestells 1 vertikal geführt ist. Mittels einer Antriebseinrichtung kann der Hubtisch 4 in jede beliebige Stellung zwischen zwei vertikal übereinanderliegende Endstellungen gebracht werden.

Die beiden Träger 5 dienen als Halterung für daraus drehbar achsparallel gelagerte Rollen 6, die gemeinsam einen Rollengang bilden. Die Achsen der Rollen 6 erstrecken sich in horizontaler Richtung von der Vorderseite des Gestells 1 in Richtung auf dessen Rückseite.

Knapp unterhalb des oberen Endes des Gestells 1 ist horizontal hin- und herbeweglich ein Ablagetisch 7 mit einer planen und im wesentlichen glatten Oberseite 8 vorgesehen. Der Ablagetisch 7 trägt auf seiner linken und seiner rechten Seite jeweils zwei drehbar gelargerte achsparallele Rollen 9, die jeweils paarweise auf Laufflächen 11 laufen. Die Laufflächen 11 sind die Oberseite jeweils eines horizontal sich erstreckenden Balkens 12. Von diesen beiden Balken 12 ist der eine an den an der linken Seite befindlichen Pfeilern 2 und der andere auf gleicher Höhe an der an der rechten Seite befindlichen Pfeilern 2 des Gestells 1 starr und unbeweglich befestigt. Der Ablagetisch 7 kann somit mit Hilfe nicht veranschaulichter Antriebsmotoren horizontal zwischen zwei Stellungen hin- und herbewegt werden. In Fig. 1 ist er in seiner ersten Stellung veranschaulicht. Die zweite Stellung ergibt sich aus der unten stehenden Funktionsbeschreibung.

Das Gestell 1 trägt an seinem oberen Ende auf der linken und auf der rechten Seite jeweils auf gleicher Höhe eine Führungsschiene 13, in denen mittels insgesamt vier Laufrollen 14 ein Schlitten 15 mit einem U-förmigen Rahmen 16 horizontal hin- und herbeweglich geführt ist. Die seitlichen Schenkel des U-förmigen Rahmens 16 verlaufen parallel zwischen den beiden Führungsschienen 13, während ein sich zwischen den Schenkeln erstreckender Querbalken 17 parallel zu der Rückseite des Gestells 1 verläuft. Dieser Abschnitt 17 ist wiederum eine Laufschiene, in der Laufrollen 18 eines nach unten hängenden Trägers 19 laufen, der auf seiner Vorderseite einen Abstreifer 21 mit vertikaler planer Abstreiferfläche trägt. Mittels der Rollen 18 kann über nicht gezeigte Stellglieder der Abstreifer 21 von der rechten Gestellseite in Richtung auf die linke Gestellseite zu gestellt werden, während er durch Horizontalverschiebung des Schlittens 15 von der Rückseite des Gestells 1 in Richtung auf dessen Vorderseite zu bringen ist.

Von dem sichtbaren in Längsrichtung verlaufenden Schenkel 20 des U-förmigen Rahmens 16 hängen zwei starre Halter 22 und 23 herab, an deren zu der Mitte des Gestells 1 weisenden Seite zwei Arbeitszylinder 24 befestigt sind, deren Kolbenstangen 25 einen seitlichen Schieber 26 mit einer vertikalen planen und zur Mitte des Gestells 1 weisenden Fläche halten. Mit Hilfe der Arbeitszylinder 24 kann der Schieber 26 quer zu der Bewegungsrichtung des Ablagetisches 7 ein Stück weit hin- und herbewegt werden. Wie die Fig. 1 zeigt, reicht der rechte Schieber 26 mit seiner Hinterkante bis an den Abstreifer 21 heran, der je nach Einstellung mehr oder weniger über die Hinterkante des rechten Schiebers 26 zu der rechten Seite des Gestells 1 hin übersteht.

Ein weiterer, teilweise veranschaulichter Schlitten 27 läuft auf den beiden Querbalken 3, die die linke und die rechte Seite des Gestells 1 miteinander verbinden. Dieser Schlitten 27 enthält hierzu zwei Träger 28 und 29, die mit entsprechend drehbar gelagerten Rollen 30 gegen Kippen gesichert auf den Querbalken 3 quer zu der Bewegungsrichtung des Ablagetisches 7 geführt sind. Zwischen den beiden Trägern 28 und 29 erstreckt sich in Längsrichtung der Vorrichtung 1 eine Strebe 31, an der zwei Arbeitszylinder 32 sitzen. Die nicht sichtbaren Kolbenstangen der beiden Arbeitszylinder 32 tragen einen auf der linken Seite befindlichen Schieber 33 mit einer vertikalen planen Anschlagfläche. Der linke Schieber 33 verläuft parallel und mit Abstand zu dem rechten Schieber 26 und kann durch die Arbeitszylinder 32 ein Stück weit auf den rechten Schieber 26 zu- bzw. von diesem wegbewegt werden. Die Grundeinstellung für die Lage des linken Schiebers 33, bezogen auf die Querrichtung des Ablagetisches 8, erfolgt durch Einstellung des Schlittens 27 mittels nicht gezeigter Stellglieder.

Der linke Schieber 33, der Abstreifer 21 und der rechte Schieber 26 bilden drei Seiten eines vertikalen Schachtes, dessen Lichtraumprofil durch Verstellung des Schlittens 15 sowie des Schlittens 27 und des Trägers 19 vergrößert und verkleinert werden kann, wobei innerhalb weiter Grenzen beliebige Kantenverhältnisse des im Querschnitt rechteckigen Schachtes erzeugt werden können, denn der Abstreifer 21 erstreckt sich über den rechten Schieber 26 hinaus, während der linke Schieber 33 über die linke Kante des Abstreifers 21 in Richtung auf die Rückseite der Vorrichtung hinauslaufen kann.

An der Vorderseite des Gestells 1 sind mit Abstand voneinander zwei vertikale Führungsschienen 35 angebracht, in denen vertikal geführt ein Schlitten 36 läuft, der hierzu achsparallel gelagert insgesamt vier Führungs- oder Laufrollen 37 trägt, die paarweise in jeweils einer der beiden Führungsschienen 35 laufen. Von dem Schlitten 36 ist in Fig. 1 lediglich eine Seite zu erkennen. Es versteht sich jedoch, daß die beiden Seiten des Schlittens 36 spiegelsymmetrisch sind. Er dient der höhenverstellbaren Halterung zweier parallel mit Abstand zueinander verlaufender Führungsschienen 38, die sich horizontal parallel zu der Bewegungsrichtung des Ablagetisches 8 erstrecken und in denen ein weiterer Schlitten 39 läuft, dessen Rahmens aus zwei parallel mit Abstand verlaufenden Trägern 41 besteht, die endseitig durch Flanschplatten 42 auf der linken und auf der rechten Seite der Vorrichtung 1 miteinander verbunden sind. Auf den Flanschplatten 42 sitzen drehbar gelargert achsparallel jeweils zwei Führungsrollen 43, durch die der Schlitten 39 kippsicher in den beiden Führungsschienen 38 gelagert ist.

Der Schlitten 39 dient der verschieblichen Halterung eines Zwischenablagetisches 40, der in Fig. 1 von insgesamt vier parallel mit Abstand voneinander verlaufenden, kammartig angeordneten Gabelzinken 430 gebildet ist. Die Gabelzinken 430 befinden sich alle auf gleicher Höhe, haben dieselbe Länge und sind mit einem Ende an den beiden Trägern 41 des Schlittens 49 aufliegend starr befestigt. Die Gabelzinken 430 erstrecken sich parallel zu den Schienen 38 und damit parallel zu der Bewegungsrichtung des Ablagetisches 8, und zwar befinden sie sich in jeder Betriebsstellung auf einer Höhe, die unterhalb des Ablagetisches 7 liegt. Mittels des Schlittens 39 ist der von den Gabelzinken 4-30 gebildete Zwischenablagetisch 40 aus der gezeigten ersten Stellung in eine zurückgezogene zweite Stellung überführbar, in der die freien Enden der Gabelzinken 430 gegenüber einem kammförmigen Abstreifer-zurückgezogen sind, der unterhalb des Ablagetisches 7 gestellfest angeordnet ist. Von dem kammartigen Abstreifer ist einer der Zinken 45 sichtbar. Die Abmessungen des hieraus gebildeten Abstreifers ergeben sich aus der unten stehenden Funktionsbeschreibung.

Dem Abstreifer 45 gegenüber befindet sich in dem Gestell 1 ein Schieber 46, der an Kolbenstangen 47 zweier Arbeitszylinder 48 sitzt, die an einem Teil des Trägers 19 befestigt sind, der seitlich den Ablagetisch 7 zu dessen Unterseite hin umgreift. Die Grundeinstellung des Schiebers 46 wird auf diese Weise zusammen mit einer Veränderung der Grundeinstellung des Abstreifers 21 mit eingestellt, während andererseits unabhängig von dem Abstreifer 21 über die Arbeitszylinder 48 eine begrenzte Hin- und Herbewegung auf den kammförmigen Abstreifer 45 zu bzw. von diesem weg möglich ist.

Dem Überführen der ankommenden flachen Elemente auf den Ablagetisch 7 dienen vier endlose Transportbänder 49, die zwischen den Gabelzinken 430 sich bis zu dem kammförmigen Abstreifer 45 erstrecken und dort auf losen Umlenkrädern 51 gelagert sind. Der Antrieb der Förderbänder 49 erfolgt durch zugehörige Antriebsräder 52, die drehfest auf einer in entsprechenden Lagern gelagerten Antriebswelle 53 sitzen. Zwischen dem Losrad 51 und dem Antriebsrad 52 ist der Arbeitstrum jedes Förderbandes 49 durch eine Gleitschiene 54 unterstützt.

Der letzte Bereich des Transportes der flachen Elemente auf den Ablagetisch 7 erfolgt mit Hilfe eines vertikal und horizontal verfahrbaren Zuführschiebers 56, der rechen- oder kammartig ausgebildet ist und mehrere parallel zueinander nach unten weisende Kamm- oder Gabelzinken 55 trägt. Diese sind mit ihrem oberen Ende an einem Querstück 57 eines U-förmigen Rahmens befestigt, dessen beide Seitenteile 58 mit Hilfe von Laufrollen 59 in vertikalen Führungsschienen 61 geführt sind. Die vertikalen Führungsschienen 61 befinden sich ihrerseits wieder in einem Schlitten, von dem lediglich ein Seitenteil 62 gezeigt ist, das in der Führungsschiene 13 Läuft. Das nicht sichtbare andere Seitenteil dieses Schlittens Läuft in einer mit der Führungsschiene 13 korrespondierenden Führungsschiene auf der linken Seite. Damit eine möglichst leichtgängige Bewegung in der Schiene 13 bzw. der korrespondierenden Führungsschiene möglich ist, ist das Seitenteil 62 und das entsprechende andere Seitenteil auch mit jeweils zwei achsparallelen Führungsrollen 63 versehen, die in der Führungsschiene 13 bzw. der entsprechenden Führungsschiene laufen. Anstatt den Zuführschieber 56 vertikal verschieblich zu lagern, ist es auch möglich, ihn schwenkbar zu haltern.

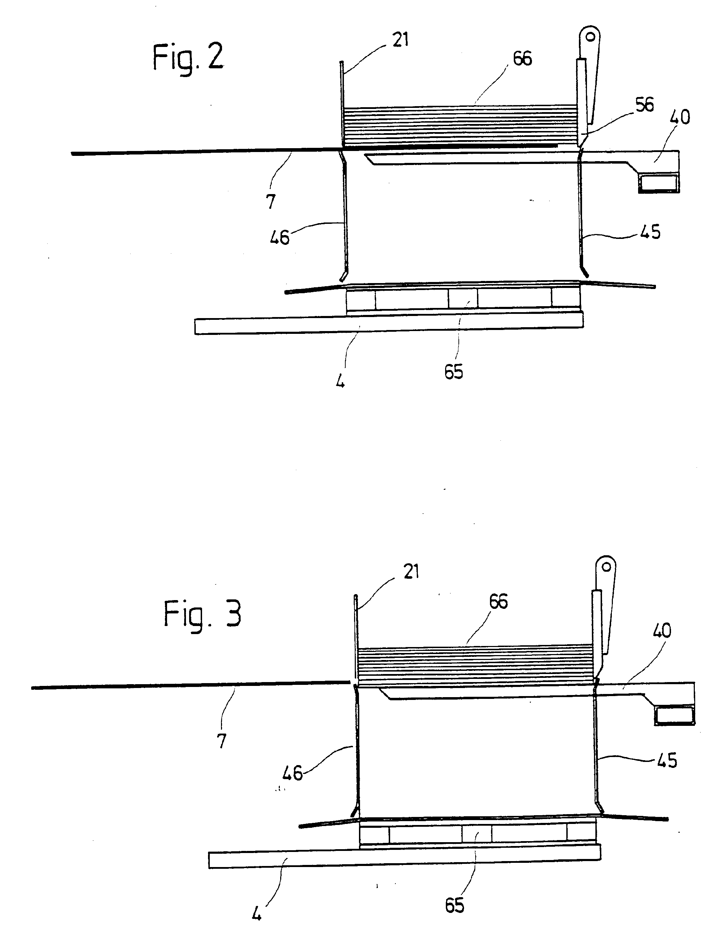

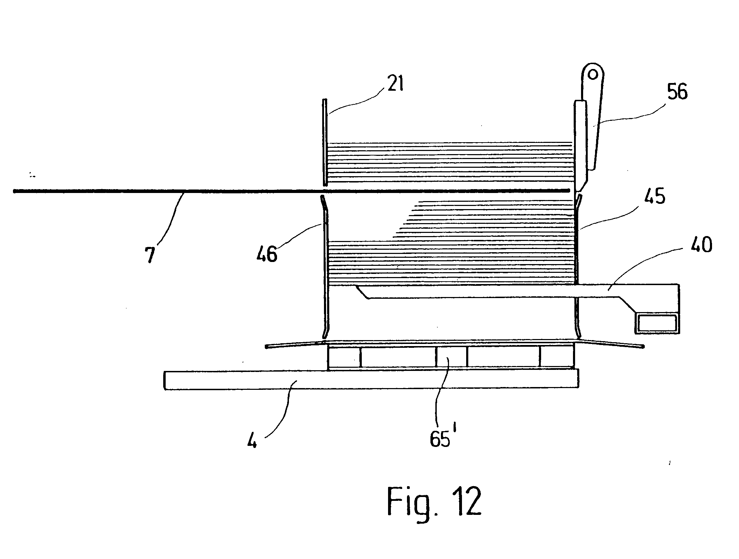

Die insoweit beschriebene Vorrichtung zum Palettieren arbeitet wie folgt, wobei zusätzlich auf die schematischen Darstellungen der Figuren 2 bis 12 bei der Erläuterung der einzelnen Arbeitsschritte bezug genommen wird:

Ehe der eigentliche Arbeitsbetrieb begonnen wird, wird zunächst die erforderliche Grundeinstellung der seitlichen Schieber 26 und 33 sowie des Abstreifers 21 und des Schiebers 46 eingestellt. Dazu werden zunächst die entsprechenden Stellglieder zum Verfahren des Schlittens 15 in Gang gesetzt, um den Abstreifer 21 in eine Lage zu bringen, bei der seine wirksame, zu der Vorderseite des Gestells 1 weisende Anschlagfläche vom dem kammförmigen Abstreifer 45 einen in einer horizontalen Ebene gemessenen Abstand aufweist, der geringfügig größer als die Tiefe der zu stapelnden flachen Elemente ist. Nach Erreichen der gewünschten Lage wird der entsprechende, nicht dargestellte Stellantrieb stillgesetzt. Bei der Einstellung des Abstreifers 21 wurde zwangläufig der Schieber 46 in Richtung auf den kammförmigen Abstreifer 45 zugestellt, und zwar so weit, daß bei ausgefahrenen Arbeitszylindern 48 die wirksame Anschlagfläche des Schiebers 46 von der wirksamen Anschlagfläche des kammförmigen Abstreifers 45 einen Abstand hat, der der Tiefe der zu stapelnden flachen Elemente entspricht. Bei dieser Einstellung wurde der seitliche Schieber 26 mehr oder weniger weit in Richtung der Vorderseite des Gestells 1 verschoben und ragt ein entsprechendes Stück über den in seiner gezeichneten ersten Stellung befindlichen Schlitten 39.

Sobald diese Einstellung vorgenommen ist, wird der Schlitten 27 bewegt, um den Abstand zwischen den beiden seitlichen Schiebern 26 und 33 auf die Breite der zu stapelnden flachen Elemente einzustellen. Dabei wird die Bewegung des Schlittens 27 angehalten, sobald die beiden seitlichen Schieber 26 und 33 bei ausgefahrenen Arbeitszylindern 24 und 32 einen Abstand voneinander haben, der der Länge der zu stapelnden flachen Elemente entspricht. Hierbei wird gleichzeitig der Abstreifer 21 in der Führungsschiene 17 in Querrichtung (von links nach rechts) des Gestells 1 verschoben.

Nachdem diese Grundeinstellung erreicht ist, kann mit dem eigentlichen Stapelbetrieb begonnen werden. Dazu wird, falls noch nicht geschehen, der Hubtisch 4 in seine unterste Stellung abgesenkt, um eine Palette 65 auf dem Rollengang 6 zu plazieren, Sodann wird der Hubtisch 4 angehoben, bis die Palette 65 mit ihrer Oberseite knapp über den Unterkanten des Schiebers 46 sowie des kammförmigen Abstreifers 45 steht, die beide dieselbe Höhe an ihrer Unterkante aufweisen. Nun wird der Ablagetisch 7 in die in Fig. 1 gezeigte und auch in Fig. 2 zu erkennende erste Stellung gebracht, in der seine Vorderkante sich in einem geringen Abstand von dem kammförmigen Abstreifer 45 befindet. Gleichzeitig wird auch der Zwischenablagetisch 40 in seine erste Stellung gebracht, in der sich seine Ablagefläche innerhalb des Lichtraumprofils befindet, das von den beiden seitlichen Schiebern 26 und 33 sowie dem Abstreifer 21 begrenzt ist.

Dabei versteht es sich, daß, um ein Einklemmen der flachen Elemente zwischen dem Ablagetisch 7 und den Unterkanten der seitlichen Schieber 26 und 33 sowie dem Abstreifer 21 zu vermeiden, der zwischen den Unterkanten und der Oberseite 8 entstehende Spalt so klein wie möglich gehalten wird.

Es werden jetzt die Arbeitszylinder 24 und 32 eingefahren, damit die seitlichen Schieber 26 und 33 den größten bei dieser Einstellung möglichen Abstand voneinander haben. Nachdem nun außerdem der Träger 57 des Zufuhrschiebers 56 im Gegenuhrzeigersinne hochgeschwenkt ist, kann ein über die Transportbänder 49 herankommendes Paket oder Bündel einzelner flacher Elemente in Richtung auf den Abstreifer 51 in die Vorrichtung hineinbefördert werden. Dieses Paket bzw. dieser Stapel ist in Fig. 1 mit strichpunktierten Linien schematisch gezeichnet und mit dem Bezugszeichen 66 versehen. Um das Paket 66 vollständig auf den Ablagetisch 7 zu bringen, wird der Zuführschieber 56 um seine durch die Traverse 57 gebildete Achse im Uhrzeigersinne heruntergeschwenkt, bis seine Gabelzinken 56 senkrecht nach unten hängen. Durch anschließendes Vorfahren des Schlittens 62 in Richtung auf den Abstreifer 21 wird das Paket 66 bis zu dem Abstreifer 21 vorgeschoben. Damit wird eine Ausrichtung der einzelnen, von den flachen Elementen gebildeten Lagen des Paketes 66 in Bewegungsrichtung erreicht. Anschließend werden die Druckmittelzylinder 32 und 24 betätigt und die seitlichen Schieber 26 und 33 herangefahren, um das aus den einzelnen flachen Elementen bestehende Paket 66 auch seitlich richtig auszurichten. Dieser Zustand ist in Fig. 2 veranschaulicht. Es wird nun durch die entsprechende Antriebseinrichtung der Ablagetisch 7 zur Hinterseite des Gestells 1 aus seiner ersten in seine zweite Lage zurückgezogen, und zwar so weit, bis seine Vorderkante, die dem Zuführschieber 56 gegenübergestanden ist, hinter die wirksame Anschlagfläche des Abstreifers 21 zurückgezogen ist. Diese Stellung des Ablagetisches 7 ist seine zweite Stellung. Wegen des Zurückziehens des Ablagetisches 7 in seine zweite Stellung fällt das Paket 66 auf die darunter befindlichen Gabelzinken 43 des Zwischenablagetisches 39. Es wird damit der Zustand nach Fig. 3 erreicht.

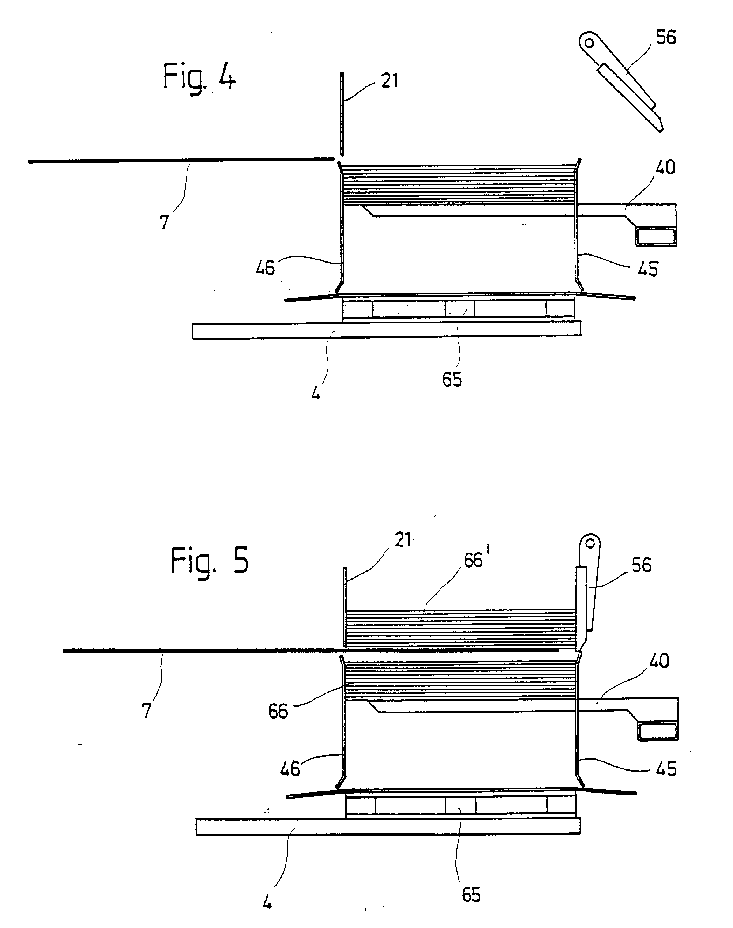

Jetzt kann der Zwischenablagetisch 40 mit Hilfe des Schlittens 36 um die Höhe des Paketes 66 abgesenkt werden, bis die Oberseite des auf dem Zwischenablagetisch 40 befindlichen Kleinstapels außerhalb des Lichtraumprofils der Bewegung des Ablagetisches 7 liegt, wenn dieser wieder in seine erste Stellung zurückgeschoben wird. Gleichzeitig mit dem Absenken des Zwischenablagetisches 4 wird der Zuführschieber 56 im Gegenuhrzeigersinne in die horizontale Stellung hochgeschwenkt, um den Betriebszustand aus Fig. 4 zu erreichen. Es kann jetzt der Ablagetisch 7 in seine erste Stellung zurückgeschoben werden, in der seine Vorderkante praktisch unmittelbar an die Förderbänder 49 anstößt. Weil außerdem die seitlichen Schieber 26 und 33 durch entsprechende Betätigung ihrer Arbeitszylinder 24 und 32 in die Außenstellung zurückgezogen sind, kann das nächste Paket 66′, bestehend wiederum aus einem kleinen Stapel lose aufeinanderliegender flacher Elemente mit Hilfe der Förderbänder 49 auf den Ablagetisch 7 befördert werden, wobei das letzte Stück des Transportweges des Paketes 66′ mit Hilfe des in die senkrechte Stellung zurückschwenkenden kammartigen Zuführschiebers 56 bewerkstelligt wird, denn vor dem Anstoßen des Paketes 66′ an dem Abstreifer 21 kommt die unterste Lage des Paketes 66′ von den Transportbändern 49 frei. Dies ist deswegen notwendig, damit das spätere Absenken des Paketes 66′ nicht von den Transportbändern 49 behindert wird.

Durch das Zurücksckwenken des Zuführschiebers 56 und das Zustellen der beiden seitlichen Schieber 26 und 33 wird wie vorher der auf dem Ablagetisch 7 befindliche kleine Stapel 66′ ordnungsgemäß allseitig ausgerichtet. Gleichzeitig wird auch durch Betätigen der Arbeitszylinder 48 der Schieber 46 in Richtung auf den kammartigen Abstreifer 45 vorgeschoben, um eventuelle Ungleichförmigkeiten in dem Stapel 66 zu beseitigen, die unter Umständen beim Absenken des Stapels 66 auf den Zwischenablagetisch 40 entstanden sein können.

Sobald die Stapel 66 und 66′ ausgerichtet sind, was in Fig. 5 gezeigt ist, wird der Ablagetisch 7 aus der ersten in die zweite Stellung zurückgezogen, damit das den kleinen Stapel bildende Paket 66′ auf die Oberseite des Paketes 66 fallen kann. Anschließend wird erneut der Zwischenablagetisch 40 um ein weiteres Stück abgesenkt, bis die Oberseite des Paketes 66' aus dem Lichtraumprofil des Ablagetisches 7 verschwunden ist.

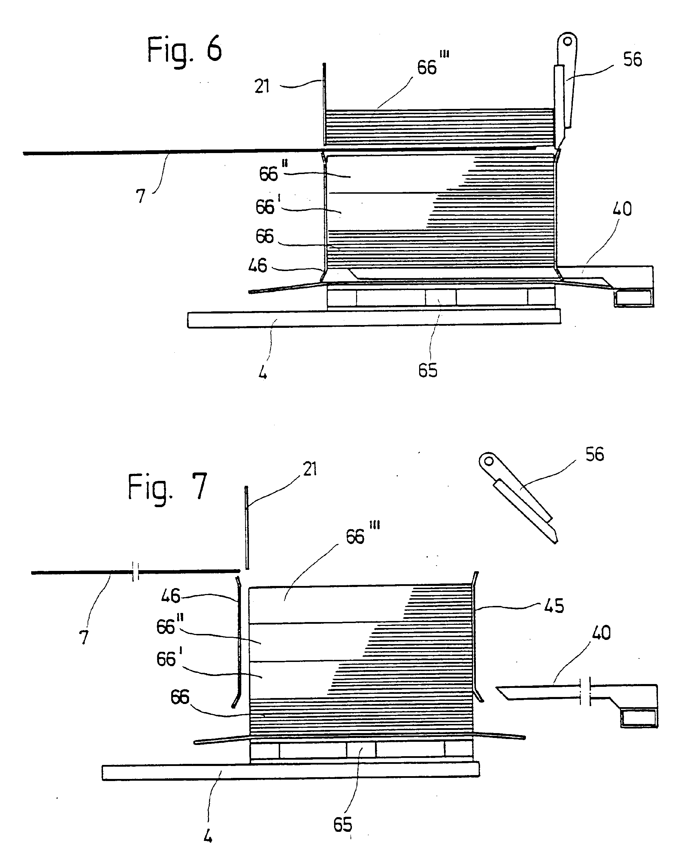

Bei dem Ausführungsbeispiel wird nach insgesamt drei Arbeitszyklen der eben beschriebenen Art ein Zustand erreicht, wie er in Fig. 6 gezeigt ist. Hier befinden sich auf dem Zwischenablagetisch 40 insgesamt drei Pakete 66, 66' und 66", deren Höhe so groß ist, daß die Unterseite des Zwischenablagetisches 40 von der Oberseite der Palette 65 einen Abstand hat, der kleiner ist als die Höhe eines nächsten auf dem Ablagetisch 7 angekommenen Paketes 66'''. Es wird deswegen vor dem Herausziehen des Ablagetisches 7 in seine zweite Stellung zunächst einmal der zwischenablagetisch 40 aus der ersten Stellung, in der er sich zwischen dem Abstreifer 45 und dem Schieber 46 befindet, in seine zweite Stellung zurückgezogen, in der die freien Enden der Gabelzinken 430 hinter der kammartigen Abstreifer 45 zurückstehen. Dadurch wird der bislang auf dem Zwischenablagetisch 40 ruhende Teilstapel aus den einzelnen Paketen 66, 66' und 66" auf die Oberseite der Palette 65 abgesenkt. Der Zwischenablagetisch 40 befindet sich damit außerhalb des Lichtraumprofils des auf der Palette 65 zu bildenden Stapels. Daraufhin kann durch Zurückziehen des Ablagetisches 7 in seine zweite Stellung das vorausgerichtete Paket 66''' auf die Oberseite des jetzt auf der Palette 65 stehenden Stapels aus den Paketen 66, 66' und 66" abgesenkt werden. Weil dieses Absenken mit geschlossenem Zuführschieber 56 geschieht, dessen wirksame Anschlagfläche mit der Anschlagfläche des kammförmigen Abstreifers 45 fluchtet, fällt das aus den losen Lagen bestehende Paket geordnet in den Schacht, der zwischen dem kammförmigen Abstreifer 45 und dem Schieber 46 definiert ist.

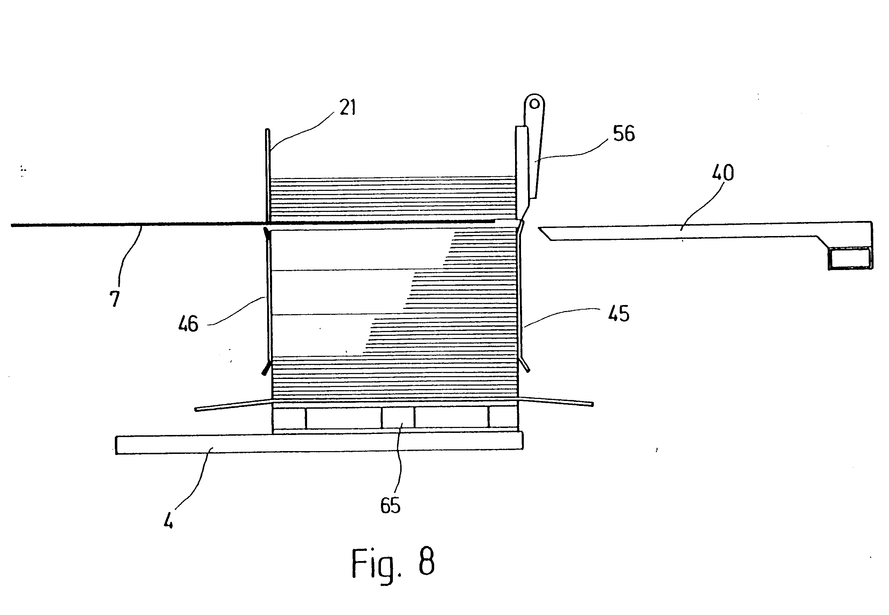

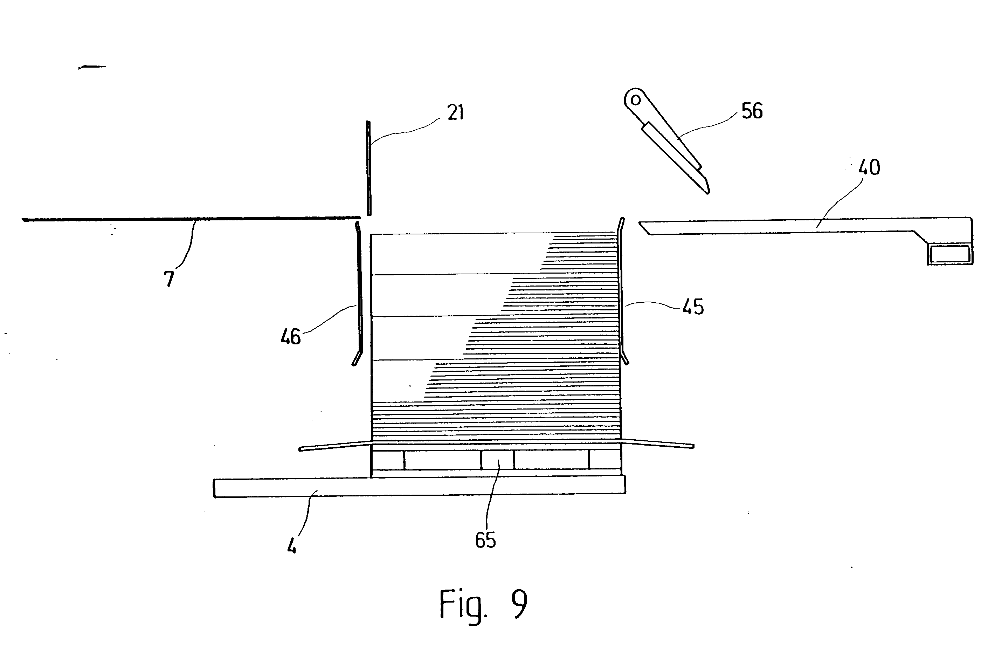

Wenn jetzt das Paket 66''' auf der Oberseite des Paketes 66" aufliegt, kann nach Zurückziehen des Schiebers 46 der auf der Palette 65 stehende Teilstapel aus den einzelnen zusammengetragenen losen Paketen 66...66''' durch Ablassen des Hubtisches 4 samt der darauf befindlichen Palette 65 abgesenkt werden, bis schließlich die Oberseite des Paketes 66''' tief genug steht, um nicht das Vorschieben des Ablagetisches 7 in die erste Stellung zu behindern. Damit ist der Zustand nach Fig. 7 erreicht. Es werden jetzt erneut nach Vorschieben des Ablagetisches 7 in die erste Stellung zu kleinen Paketen zusammengetragene flache Elemente zugeführt, die in der oben beschriebenen Weise auf den Ablagetisch 7 befördert und dort ausgerichtet werden. Diese Betriebsweisen zeigen die Fig. 8 und 9. Das Absenken des jeweils auf der Palette 65 bestehenden Teilstapels geschieht durch Absenken des Hubtisches, während weiterhin der Zwischenablagetisch 40 in seiner zweiten Stellung in Ruhe bleibt. Er ist lediglich zwischenzeitlich aus der unteren Endlage in die obere Endlage nach Fig. 2 überführt worden, in der er sich auf einer Höhe befindet, die knapp unterhalb des Ablagetisches 2 ist.

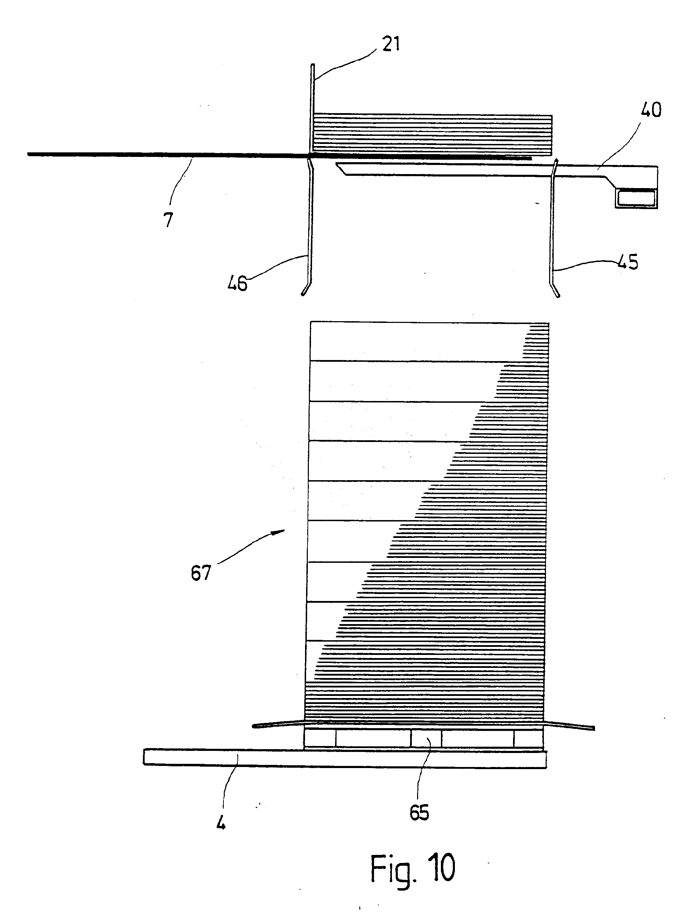

Nach einer Vielzahl der beschriebenen Funktionsabläufe mit Zuführen von Paketen, Ausrichten und Übergeben auf den Teilstapel auf der Palette durch Zurücksziehen des Ablagetisches 7 wird schließlich der Zustand nach Fig. 10 erreicht, der die Situation zeigt, wenn der vollständige Stapel 67 auf der Palette 65 zusammengetragen ist. Jetzt wird der Hubtisch 4 in seine unterste Stellung abgesenkt, was dazu führt, daß die Oberseite des vollständigen Stapels 67 unter der Unterkante des Schiebers 46 und des kammförmigen Abstreifers 45 auftaucht und freikommt. Durch Ingangsetzen des Rollenganges 6 kann die gefüllte Palette 65 aus der Vorrichtung heraustransportiert werden.

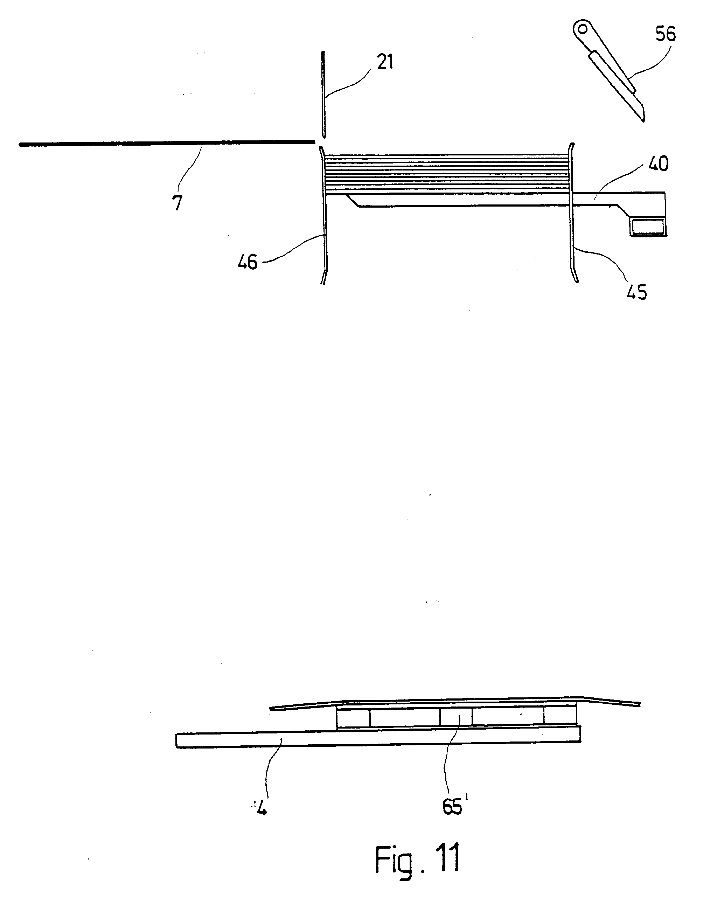

Während der Entnahme der gefüllten Palette 65 und dem Einsetzen einer neuen Palette 65' kann der Stapelbetrieb ununterbrochen fortgesetzt werden. Nach dem Absenken des Hubtisches 4 in die unterste Stellung wurde nämlich, wie Fig. 10 zeigt, der Zwischenablagetisch 40, der sich bislang in seiner zweiten oder Ruhestellung befunden hatte, erneut durch den kammartigen Abstreifer 45 in die erste Stellung vorgeschoben, womit, abgesehen von der Position der Palette 65' bzw. 65, wieder die Betriebssituation nach Fig. 2 erreicht ist. Der Zwischenablagetisch 40 befindet sich mit seiner Zwischenablagefläche unmittelbar unter dem Ablagetisch 7 und kann beim Zurückziehen des Ablagetisches 7 aus der ersten in die zweite Stellung die ankommenden Pakete übernehmen. Aus der obigen Beschreibung ist klar, daß für den Beginn eines neuen Stapels 67 die Palette 65 bzw. 65' nicht benötigt wird. Vielmehr läuft zu Beginn der Stapelvorgang ausschließlich mit Hilfe des Zwischenablagetisches 40 und erst später wird der Zwischenablagetisch in die zweite Stellung zurückgenommen, so daß der weitere Stapelvorgang mit einer Höhenverstellung der Palette 65 erfolgt. Fig. 11 zeigt dann auch eine Situation, die, was die Übernahme des ersten Paketes für einen Stapel veranschaulicht, der Situation nach Fig. 4 entspricht, lediglich mit dem Unterschied, daß die neue Palette 65' noch in einem großen Abstand unterhalb des Zwischenablagetisches 40 steht. Während oberhalb des Zwischenablagetisches 40, wie vorher beschrieben, der Stapelvorgang weiter abläuft, wird der Hubtisch 4 angehoben, bis die Palette 65' auf höhe der Unterkante des Schiebers 46 und des kammförmigen Abstreifers 45 ankommt. Die Zeit, die zum Auswechseln der vollen Palette 65 gegen eine neue leere Palette 65' benötigt wird, wird durch die Tätigkeit und den zur Verfügung stehenden Hub des Zwischenablagetisches 40 überbrückt. Der Fortgang des Stapelbetriebes wird deswegen durch den Palettenwechsel nicht beeinträchtigt und es müssen auch keine zuliefernden Maschinen stillgesetzt werden, während in der Vorrichtung der Palettenwechsel vollzogen wird.

**Patentansprüche**

1. Vorrichtung zum automatischen Stapeln oder Palettieren von flachen Elementen (66) wie Pappzuschnitten, vorgefalteten flachliegenden Faltschachteln und dergl.
mit einem Gestell (1), in dem ein eine Stellfläche für eine Palette (65) bildender Hubtisch (4) höhenverstellbar angetrieben geführt und in beliebige Stellungen zwischen zwei Endlagen bringbar ist,
mit angetriebenen Mitteln (49, 56) zum Zuführen der flachen Elemente (66) in das Lichtraumprofil eines auf der Palette (65) aufzustapelnden Stapels (67),
mit einem in dem Gestell (1) oberhalb des Hubtisches (4) angeordneten Zwischenablagetisch (40), der in dem Gestell (1) höhenverstellbar gehalten und angetrieben in beliebige Stellungen zwischen zwei vertikal übereinanderliegende Endstellungen bringbar ist und der in dem Gestell (1) vertikal verschieblich geführt und zwischen zwei horizontalen Stellungen angetrieben hin und her bewegbar ist, wobei der von.Sich in horizontaler Richtung parallel zu der horizontalen Bewegungsrichtung des Zwischenablagetisches (40) erstreckenden Gabelzinken (43) gebildete Zwischenablagetisch (40) sich in der ersten Horizontalstellung in dem Lichtraumprofil des auf der Palette (65) aufzustapelnden Stapels (67) befindet und in der zweiten Stellung aus dem Lichtraumprofil des auf der Palette (65) aufzustapelnden Stapels (67) herausbewegt ist,
und mit im wesentlichen oberhalb des Zwischenablagetisches (40) angeordneten,dem Ausrichten von gestapelten flachen Elementen (66) dienenden Ausrichtmitteln (21, 26, 33), die einen vertikalen Schacht begrenzen, der gegen die Zufuhrrichtung der flachen Elemente (66) zu offen ist,
wobei die flachen Elemente (66) auf dem Zwischenablagetisch (40) durch Überführen desselben in die zweite Horizontalstellung auf die Palette (65) bzw. auf die Oberseite eines auf der Palette (65) befindlichen Teilstapels (67) bringbar sind,
dadurch gekennzeichnet,
daß in dem Gestell (1) oberhalb des Zwischenablagetisches (40) ein horizontaler Ablagetisch (7) vorgesehen ist, der die ankommenden flachen Elemente (66) aufnimmt und der in dem Gestell (1) horizontal geführt sowie zwischen zwei Stellungen angetrieben hin und her bewegbar ist, wobei er sich in der ersten Stellung in dem Lichtraumprofil des auf der Palette (65) aufzustapelnden Stapels (67) befindet und in der zweiten Stellung aus dem Lichtraumprofil des auf der Palette (65) aufzustapelnden Stapels (67) herausbewegt ist,
daß die auf dem Ablagetisch (7) befindlichen flachen Elemente (66) durch Überführen desselben in die zweite Stellung auf dem Zwischenablagetisch (40) bzw. die Oberseite eines auf dem Zwischenablagetisch (40) befindlichen Kleinstapels oder die Oberseite des auf der Palette befindlichen Teilstapels (67) bringbar sind,
daß unterhalb des Ablagetisches (7) eine Abstreiferfläche (45) vorgesehen ist, die sich zwischen der ersten und der zweiten Horizontalstellung des Zwischenablagetisches (40) befindet und die von einer Vielzahl vertikaler Streben (45) gebildet ist, zwischen denen die Gabelzinken (43) des Zwischenablagetisches (40) in horizontaler sowie in vertikaler Richtung hin und her bewegbar sind, und daß unterhalb des Ablagetisches (7) ein Schieber (46) vorgesehen ist, der mit Abstand parallel zu der Abstreiferfläche (45) verläuft.

2. Vorrichtung nach Anspruch 1, dadurch gekennzeichnet, daß der Ablagetisch (7) eine im wesentlichen glatte Oberseite (8) aufweist.

3. Vorrichtung nach Anspruch 1, dadurch gekennzeichnet, daß die Ausrichtmittel (21, 26, 33) zum Abstreifen der flachen Elemente (66) von dem Ablagetisch (7) einen Abstreifer (21) aufweisen, der oberhalb der Oberseite (8) des Ablagetisches (7) und zwischen dessen erster und zweiter Stellung angeordnet ist.

4. Vorrichtung nach Anspruch 1, dadurch gekennzeichnet, daß die Ausrichtmittel (21, 26, 33) zwei weitere Schieber (26, 33) aufweisen, die oberhalb der Oberseite (8) des Ablagetisches (7) parallel zu der Bewegungsrichtung des Ablagetisches (7) vertikal mit Abstand einander gegenüberstehend angeordnet sind, und daß wenigstens einer der Schieber (26, 33) durch Antriebsmittel (24, 32) zum Ausrichten des auf dem Ablagetisch (7) befindlichen Kleinstapels ein Stück weit auf den anderen Schieber (26, 33) zubewegbar ist.

5. Vorrichtung nach Anspruch 4, dadurch gekennzeichnet, daß einer der seitlichen Schieber (26) bis an den zwischen den beiden Stellungen des Ablagetisches (7) befindlichen Abstreifer (21) heran reicht, während der andere seitliche Schieber (33) über den rechtwinklig dazu und quer zu der Bewegungsrichtung des Ablagetisches (7) angeordneten Abstreifer (21) sich hinauserstreckend angeordnet ist.

6. Vorrichtung nach den Ansprüchen 3 und 4, dadurch gekennzeichnet, daß einige der Schieber (26, 33) und/oder Abstreifer (21) auf Haltern (16, 19, 27) sitzen, die zur Veränderung der Grundeinstellung in dem Gestell (1) verstellbar gehaltert sind.

7. Vorrichtung nach Anspruch 1, dadurch gekennzeichnet, daß die vertikale Erstreckung der Abstreiferfläche (45) kleiner ist als eine festgelegte Höhe des vollständigen Stapels (67) auf der Palette (65).

8. Vorrichtung nach Anspruch 1, dadurch gekennzeichnet, daß der zweite Schieber (46) hin und her beweglich gelagert ist und durch Antriebsmittel (48) zum Ausrichten des Stapels oder Teilstapels ein Stück weit auf die Abstreiferfläche (45) zubewegbar ist.

9. Vorrichtung nach Anspruch 1, dadurch gekennzeichnet, daß die Bewegungsrichtung des Ablagetisches (7) und die Bewegungsrichtung des Zwischenablagetisches (40) parallel zueinander sind.

10. Vorrichtung nach Anspruch 1, dadurch gekennzeichnet, daß die Mittel zum Überführen der flachen Elemente auf den Ablagetisch einen zumindest horizontal hin und her beweglich geführten Schieber (56) umfassen, der eine Anschlagfläche zum Ausrichten der auf dem Ablagetisch (7) befindlichen flachen Elemente (66) bildet.

11. Vorrichtung nach Anspruch 9, dadurch gekennzeichnet, daß sich der Ablagetisch (7) und der Zwischenablagetisch (40) beim Überführen aus der jeweils ersten in die jeweils zugehörige zweite Stellung in einander entgegengesetzte Richtungen bewegen.

12. Vorrichtung nach Anspruch 1, dadurch gekennzeichnet, daß die Mittel zum Überführen der flachen Elemente zu dem Ablagetisch endlose Förderriemen (49) umfassen, die sich parallel zu der Bewegungsrichtung des Ablagetisches (7) erstrecken.

13. Vorrichtung nach Anspruch 1, dadurch gekennzeichnet, daß der Hubtisch (4) mit einem Rollengang (6) versehen ist.

14. Vorrichtung nach Anspruch 1, dadurch gekennzeichnet, daß eine zentrale Steuereinheit vorgesehen ist, die eine koordinierte Bewegung der beweglichen Teile der Vorrichtung bewirkt.

**Claims**

1. An apparatus for the automatic stacking or palletizing of flat elements (66), such as cardboard blanks, prefolded flat folding boxes and the like, having: a frame (1), in which a lifting table (4) forming a charging space for a pallet (65) is guided driven vertically adjustably and can be moved into any desired positions between two end positions; driven means (49, 56) for supplying the flat elements (66) to the clearance gauge of a stack (67) to be stacked on the pallet (65); an intermediate depositing table (40) which is disposed in the frame (1) above the lifting table (4) and which is retained vertically adjustably and driven in the frame (1) and which can be moved into any positions between two vertically superimposed end positions and which is guided vertically displaceably in the frame (1) and can be driven in horizontal reciprocation between two horizontal positions, the intermediate depositing table (40), formed by fork tines (43) extending in the horizontal direction parallel with the direction of horizontal movement of the intermediate depositing table (40), being disposed in the first horizontal position in the clearance gauge of the stack (67) to be stacked on the pallet (65) and being moved in the second position out of the clearance gauge of the stack (67) to be stacked on the pallet (65); and aligning means (21, 16, 33) which are disposed substantially above the intermediate depositing table (40) and are used for aligning stacked flat elements (66) and which bound a vertical shaft open towards the supply direction of the flat elements (66), while the flat elements (66) on the intermediate depositing table (40) can be moved, by the transference of said table into the second horizontal position, on to the pallet (65) or on to the top side of a partial stack (67) disposed on the pallet (65), characterized in that provided in the frame (1) above the intermediate depositing table (40) is a horizontal depositing table (7) which receives the arriving flat elements (66) and which is horizontally guided in the frame (1) and can be driven in reciprocation between two positions, said table (7) being disposed in the first position in the clearance gauge of the stack (67) to be stacked on the pallet (65) and being moved in the second position out of the clearance gauge of the stack (67) to be stacked on the pallet; the flat elements (66) disposed on the depositing table (7) can be moved, by the transference of said table into the second position, on to the intermediate depositing table (40) or the top side of a small stark disposed on the intermediate depositing table (40) or the top side of the partial stack (67) disposed on the pallet; provided below the depositing table (7) is a stripping surface (45), disposed between the first and second horizontal positions of the intermediate depositing table (40) and formed by a plurality of vertical struts (45), between which the fork tines (43) of the intermediate depositing table (40) can be reciprocated in both the horizontal and vertical directions; and provided below the depositing table (6) is a pusher (46) extending at a distance parallel with the stripping surface (45).

2. An apparatus according to claim 1, characterized in that the depositing table (7) has a substantially smooth top side (8).

3. An apparatus according to claim 1, characterized in that the aligning means (21, 26, 33) have for the stripping of the flat elements (66) off the depositing table (7) a stripper (21) which is disposed above the top side (8) of the depositing table (6) between its first and second positions.

4. An apparatus according to claim 1, characterized in that the aligning means (21, 26, 33) have two further pushers (26, 33) disposed vertically spaced out opposite one another above the top side (8) of the depositing table (7) parallel with the direction of movement thereof, and at least one of the pushers (26, 33) can be moved some distance towards the other pusher (26, 33) by driving means (24, 32), for the aligning of the small stack disposed on the depositing table (7).

5. An apparatus according to claim 4, characterized in that one of the lateral pushers (26) extends as far as the stripper (21) disposed between the two positions of the depositing table (7), while the other later pusher (33) is disposed extending beyond the stripper (21) disposed at right angles thereto and transversely of the direction of movement of the depositing table (7).

6. An apparatus according to claims 3 and 4, characterized in that some of the pushers (26, 33) and/or strippers (21) are disposed on holders (16, 19, 27) which are retained adjustably for altering the basic adjustment in the frame (1).

7. An apparatus according to claim 1, characterized in that the vertical extension of the stripper surface (45) is smaller than a predetermined height of the complete stack (27) on the pallet (65).

8. An apparatus according to claim 1, characterized in that the second pusher (46) is mounted for horizontal reciprocation and can be moved some distance towards the stripper surface (45) by driving means (48) for the alignment of the stack or partial stack.

9. An apparatus according to claim 1, characterized in that the direction of movement of the depositing table (7) and the direction of movement of the intermediate depositing table (40) are parallel with one another.

10. An apparatus according to claim 1, characterized in that the means for transferring the flat elements to the depositing table comprise an at least horizontally reciprocally guided pusher (56) which forms a stop surface for the alignment of the flat elements (66) disposed on the depositing table (7).

11. An apparatus according to claim 9, characterized in that during transference from the first position to the particular associated second position, the depositing table (7) and the intermediate depositing table (40) move in opposite directions.

12. An apparatus according to claim 1, characterized in that the means for transferring the flat elements to the depositing table comprise endless conveyor belts (49) which extend parallel with the direction of movement of the depositing table (7).

13. An apparatus according to claim 1, characterized in that the lifting table (4) has a train of rollers (6).

14. An apparatus according to claim 1, characterized in that a central control unit is provided which coordinates the movement of the movable parts of the apparatus.

## Revendications

1. Dispositif pour le gerbage ou la palettisation automatique d'éléments plats (66) tels que des pièces découpées en carton, des boîtes pliantes pré-pliées et disposées à plat et analogues, comprenant un bâti (1) dans lequel une table élévatrice (4) formant une surface pour poser une palette (65) est guidée et entraînée de manière à pouvoir être réglée en hauteur et peut être amenée dans n'importe quelle position entre deux positions extrêmes, des moyens mécaniques (49, 56) pour amener les éléments plats (66) dans le profil d'espace libre d'une pile (67) devant être formée sur la palette (65), une table de réception intermédiaire (40) qui est disposée dans le bâti (1), au-dessus de la table élévatrice (4), est montée dans le bâti (1) de manière à pouvoir être réglée en hauteur, peut être amenée par un dispositif d'entraînement dans n'importe quelle position entre deux positions extrêmes situées verticalement l'une au-dessus de l'autre, est guidée dans le bâti (1) de manière à pouvoir être déplacée verticalement et peut être déplacée selon un mouvement de va-et-vient par un dispositif d'entraînement entre deux positions horizontales, la table de réception intermédiaire (40) formée par des bras de fourche (43) qui s'étendent en direction horizontale parallèlement à la direction de déplacement horizontal de la table de réception intermédiaire (40), se trouvant, dans la première position horizontale, dans le profil d'espace libre de la pile (67) devant être formée sur la palette (65) et étant déplacée, dans la deuxième position horizontale, hors du profil d'espace libre de la pile (67) devant être formée sur la palette (65), et comprenant des moyens de taquage (21, 26, 33) qui sont disposés sensiblement au-dessus de la table de réception intermédiaire (40), servent à ajuster des éléments plats (66) empilés et délimitent un puits vertical qui est ouvert vers le sens d'amenée des éléments plats (66), les éléments plats (66) se trouvant sur la table de réception intermédiaire (40) pouvant être amenés, par déplacement de ladite table dans la deuxième position horizontale, sur la palette (65) ou sur la face supérieure d'une pile partielle (67) se trouvant sur la palette (65), caractérisé en ce qu'il est prévu dans le bâti (1), au-dessus de la table de réception intermédiaire (40), une table de réception (7) horizontale qui reçoit les éléments plats (66) qui arrivent, est guidée horizontalement dans le bâti (1) et peut être déplacée selon un mouvement de va-et-vient par un dispositif d'entraînement entre deux positions, ladite table se trouvant dans la première position, dans le profil d'espace libre de la pile (67) devant être formée sur la palette (65) et étant déplacée, dans la deuxième position, hots du profil d'espace libre de la pile (67) devant être formée sur la palette (65), en ce que les éléments plats (66) qui se trouvent sur la table de réception (7) peuvent être amenés, en déplaçant ladite table dans la deuxième position, sur la table de réception intermédiaire (40) ou sur la face supérieure d'une petite pile se trouvant sur la table de réception intermédiaire (40) ou sur la face supérieure de la pile partielle (67) qui se trouve sur la palette, en ce qu'au-dessous de la table de réception (7), il est prévu une surface de guidage (45) qui se trouve entre la première et la deuxième position horizontale de la table de réception intermédiaire (40) et est formée d'une pluralité de barres (45) verticales entre lesquelles les bras de fourche (43) de la table de réception intermédiaire (40) peuvent effectuer un mouvement de va-et-vient en direction horizontale ainsi que verticale et en ce que au-dessous de la table de réception (7) il est prévu un élément coulissant (46) qui s'étend parallèlement à la surface de guidage (45) à distance de cette dernière.

2. Dispositif selon la revendication 1, caractérisé en ce que la table de réception (7) présente une face supérieure (8) sensiblement lisse.

3. Dispositif selon la revendication 1, caractérisé en ce que les moyens de taquage (21, 26, 33) présentent une racle (21) qui est destinée à faire tomber les éléments plats (66) de la table de réception (7) et est disposée au-dessus de la face supérieure (8) de la table de réception (7), entre la première et la deuxième position de ladite table.

4. Dispositif selon la revendication 1, caractérisé en ce que les moyens de taquage (21, 26, 33) présentent deux autres éléments coulissants (26, 33) qui sont disposés au-dessus de la face supérieure (8) de la table de réception (7), parallèlement à la direction de déplacement de la table de réception (7), verticalement l'une en face de l'autre à distance et en ce que au moins l'un des éléments coulissants (26, 33) peut être déplacé par des moyens d'entraînement (24, 32) en direction de l'autre coulisse (26, 33) afin de taquer la petite pile se trouvant sur la table de réception (7).

5. Dispositif selon la revendication 4, caractérisé en ce que l'un des éléments coulissants (26) latéraux va jusqu'à la racle (21) qui se trouve entre les deux positions de la table de réception (7) tandis que l'autre élément coulissant (33) latéral s'étend au-delà de la tacle (21) disposée à angle droit et est perpendiculaire à la direction de déplacement de la table de réception (7).

6. Dispositif selon les revendications 3 et 4, caractérisé en ce que certains des éléments coulissants (26, 33) et/ou des racles (21) reposent sur des supports (16, 19, 27) qui sont montés dans le bâti (1) avec une possibilité de réglage afin de modifier le réglage de base.

7. Dispositif selon la revendication 1, caractérisé en ce que la hauteur de la surface de guidage (45) est inférieure à une hauteur déterminée de la pile (67) complète sur la palette (65).

8. Dispositif selon la revendication 1, caractérisé en ce que le deuxième élément coulissant (46) est monté de manière à pouvoir effectuer un mouvement de va-et-vient et peut être déplacé vers la surface de guidage (45) par des moyens d'entraînement (48) afin d'ajuster la pile ou la pile partielle.

9. Dispositif selon la revendication 1, caractérisé en ce que la direction de déplacement de la table de réception (7) et la direction de déplacement de la table de réception intermédiaire (40) sont parallèles entre elles.

10. Dispositif selon la revendication 1, caractérisé en ce que les moyens destinés à transférer les éléments plats sur la table de réception comprennent un élément coulissant (56) qui est guidé de manière à pouvoir effectuer un mouvement de va-et-vient au moins horizontalement et forme une surface de butée pour le positionnement des éléments plats (66) se trouvant sur la table de réception (7).

11. Dispositif selon la revendication 9, caractérisé en ce que la table de réception (7) et la table de réception intermédiaire (40) se déplacent dans des directions opposées lorsqu'elles passent de là première position dans la deuxième position correspodante.

12. Dispositif selon la revendication 1, caractérisé en ce que les moyens destinés à transférer les éléments plats sur la table de réception comprennent des courroies transporteuses sans fin (49) qui s'étendent parallèlement à la direction de déplacement de la table de réception (7).

13. Dispositif selon la revendication 1, caractérisé en ce que la table élévatrice (4) est munie d'un ensemble de rouleaux (6).

14. Dispositif selon la revendication 1, caractérisé en ce qu'il est prévu une unité centrale de commande qui coordonne les déplacements des éléments mobiles du dispositif.

Fig. 1

Fig. 2

Fig. 3

Fig. 4

Fig. 5

Fig. 6

Fig. 7

Fig. 8

EP 0 359 920 B1

Fig. 9

Fig. 10

Fig . 11

Fig. 12